Europäisches Patentamt

European Patent Office

Office européen des brevets

(11) Publication number: **0 085 928**
A1

# (12) EUROPEAN PATENT APPLICATION

(21) Application number: **83100906.3**

(22) Date of filing: **01.02.83**

(51) Int. Cl.³: **A 01 G 1/04**

(30) Priority: **03.02.82 IT 332482**

(43) Date of publication of application:
**17.08.83 Bulletin 83/33**

(84) Designated Contracting States:
**AT BE CH DE FR GB LI LU NL SE**

(71) Applicant: **Ramazzotti, Enrico**
**Via Mondo 23**
**I-40127 Bologna(IT)**

(72) Inventor: **Ramazzotti, Enrico**
**Via Mondo 23**
**I-40127 Bologna(IT)**

(74) Representative: **Porsia, Dino, Dr. et al,**
**c/o Succ. Ing. Fischetti & Weber Via Caffaro 3**
**I-16124 Genova(IT)**

(54) Method and device for the insemination with mycelium of compost packages for the cultivation of mushrooms and compost package inseminated with mycelium in accordance with said method.

(57) In order to inseminate with mycelium compost packages for the cultivation of mushrooms, the compost (1) is enclosed in bags (102) of transparent plastics material, provided with filtering means (5, 6) for air exchange between the interior of the bag (102) and the outer ambient. The bags (102) containing the compost (1) are then sterilized by suitable heat treatment; and into in each bag there is driven a ponted container (10) containing mycelium developped on seeds and comprising side openings all located completely within the bag (102) and penetrating at least partly in the compost (1). The container (10) is left in its position driven in the bag (102) to keep the penetration hole closed.

Fig 2

RAMAZZOTTI Enrico,

40127 Bologna (Italia).

Method and device for the insemination with mycelium of compost packages for the cultivation of mushrooms, and compost package inseminated with mycelium in accordance with said method.

This invention relates to a method and device for the insemination with mycelium of compost packages for the cultivation of mushrooms.

The heretofore known methods for the cultivation of mushrooms, particularly those included in the class PLEUROTUS, comprise, in one case, the heat treatment (pasteurization) of the compost, the successive admixture thereof with mycelium, and then the packaging of the thus-inseminated compost into plastics bags. In another case, the conventional art comprises the preparation of the compost, its packaging into bags, the heat treatment (sterilization) of the packages and finally their insemination with mycelium. The latter operation has been effected heretofore by opening each individual bag, introducing mycelium and closing the bag again in any desired manner. This known method must be carried out in very clean and disinfected premises, generally provided with air-sterilizing systems, so as to avoid that, upon the opening of a bag, any spores in the ambient air may enter the bag and cause the contamination of the substratum in the bag and, therefore, its loss. In fact, the sterile condition of the compost in the bag facilitates, on one hand, the development of the mycelium of a cultivated mushroom, but also facilitates, on the other hand, the contamination thereof by contaminating micro-organisms in the air, with resulting detriment thereof.

The object of this invention is to provide an insemination method permitting all the operations to be carried out in normal ambient conditions and assuring a sufficient preservation of the sterile condition of the compost, while permitting the mycelium to be introduced into the compost without requiring the bag to be opened, and is of easy and simple application, permitting the use of commercially-available mycelium.

This object is achieved by the invention by means of a method of insemination with mycelium of compost packages for the cultivation of mushrooms, characterized in that the compost is packed in packages of thermoresistant plastics material, said packages are submitted to heat treatment in order to sterilize the compost, pointed containers with a sidewall provided with openings are prepared either manually or mechanically, said containers are filled with mycelium, are closed and are then driven either manually or mechanically into a package by piercing the wall of the latter and inserting at least a part of the body provided with openings of the container into the compost.

Preferably, according to another characteristic of the invention, the pointed container is driven into the compost package so as to protrude partly outwardly from the package, but so that the side opening of said container will be located all inside the package, and said container is left in this driven-in position wherein it plugs the pierced hole made by said container through the wall of said package.

The method in accordance with the invention can be used for inseminating any compost or subsoil with any mycelium. Preferably, however, according to another characteristic of the invention, the pointed containers to be driven into the compost packages are filled with commercially-available mycelium developped on seeds. The mycelium on the seeds enclosed in a pointed container driven into the compost package contacts the compost through the side openings in the driven-in container and, from these points of contact, it encroaches gradually on the compost, thus producing the insemination. The insemination by mycelium developped on seeds assures that it will thrive almost totally, because such a mycelium has a very high energy potential, unlike other kinds of insemination.

The compost to be inseminated with mycelium may be packaged in any plastics container permitting the application of the method according to the invention. Preferably, however, according to another characteristic of the invention, the container used for packaging the compost to be inseminated with mycelium are formed by bags of plastics material, which is preferably transparent and capable of resisting to a temperature of at least 115°C.

The device according to the invention for carrying the method into effect, therefore, comprises a plastics package which is preferably transparent and capable of resisting to a temperature of at least 115°C, designed to contain the compost to be inseminated with mycelium, and adapted to be closed after being filled with the compost so as to permit a slow air exchange between the outside ambient and the inside of the bag, while preventing any contamination of the compost. For this purpose, the package can be provided with at least one suitable filter for communication with the ambient atmosphere. When the package is formed by a plastics bag, the latter can be closed by sealingly tying its mouth flaps around a filter for communication with the ambient atmosphere.

The device according to the invention for carrying out the method also comprises a pointed conical container provided with openings in the side wall thereof and provided, at the end opposite to the pointed end thereof, with an enlarged end having a mouth that can be closed by a suitable plug.

The compost inseminated by the method and device in accordance with the invention is characterized in that it is enclosed in a plastics package which is preferably transparent and has driven therein a pointed, preferably conical container enclosing the mycelium and provided with side openings which are all located within the package and are at least partly located within the compost, said container protruding partly outwards from the package, preferably with an enlarged head, and being left in this driven-in position to plug the hole pierced throgh the wall of the package, said package being provided with means permitting a filtered passage of air between the inside of the package and the outside ambient.

Some embodiments of mycelium-inseminated compost packages according to the invention will be described hereinafter with reference to the enclosed drawings, wherein:

Fig. 1 is a perspective view of a first embodiment of a mycelium-inseminated compost package;

Fig. 2 is a perspective view of a second embodiment of a mycelium-inseminated compost package;

Fig. 3 is an enlarged sectional view of a detail of the package of Fig. 2;

Fig. 4 is a sectional view of a pointed container full of mycelium and driven in the packages of Figs. 1 and 2.

The compost or substratum to be inseminated with mycelium for the cultivation of mushrooms can be formed by any compost suitable for this purpose. By way of example, a compost can be advantageously prepared with a base of straw of either hard or soft corn, pelleted or bulk dried pulp from sugar-mill and, if available, dried residue from cider-manufacture. As a corrective agent, calcium carbonate can be used to maintain a pH proximate to neutral values. The straw of corn is minced into pieces 2-3 cm long. For this purpose, a common shredder can be used as those which are used in agriculture for fodder cutting, which also will store the minced straw into a silo wherefrom it is withdrawn daily. The mentioned materials are stored in preservation silos wherefrom they are daily withdrawn, are proportioned and are poured into a mixer. Calcium carbonate and an amount of water to increase the humidity to approximately 70% are also added into this mixer. After mixing, the compost may be transferred into a storage container.

By this procedure, the following two types of compost can be obtained:

|                                | Type A        | Type B        |
| ------------------------------ | ------------- | ------------- |
| Straw of grain                 | Kg. 0.360     | Kg. 0.540     |
| Beet pulp                      | "   0.360     | "   0.540     |
| Residue from cider-manufacture | "   0.360     | -             |
| Calcium Carbonate              | "   0.072     | "   0.072     |
| Water                          | litres 2.448  | litres 2.448  |

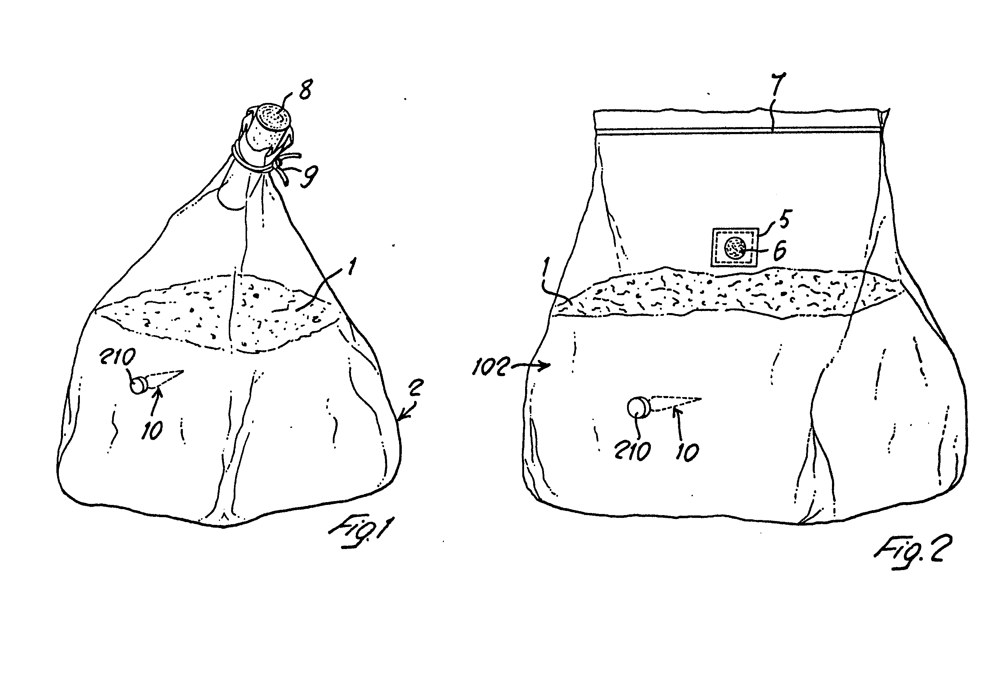

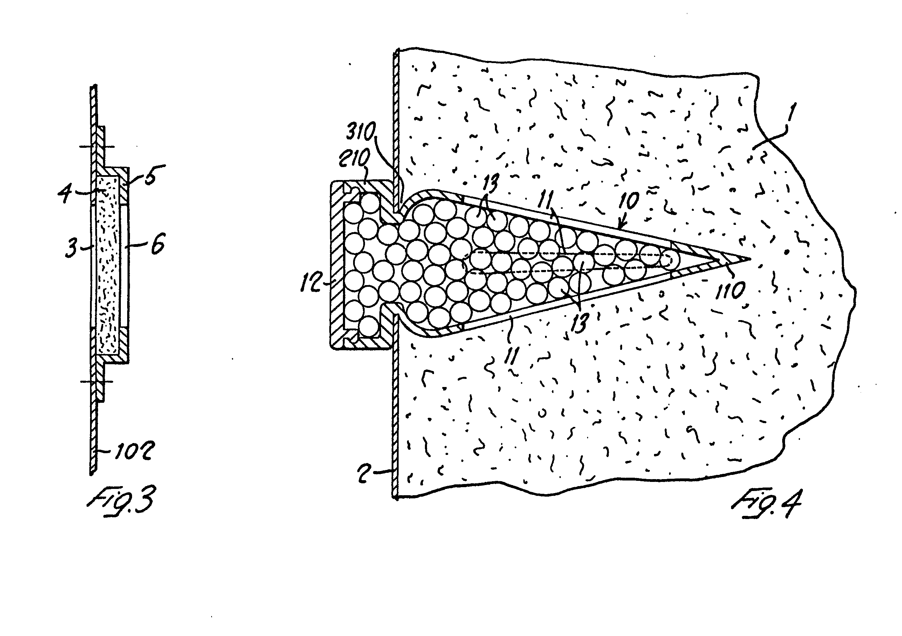

Suitable packages, which in the illustrated embodiments are formed by bags 2 or 102 of transparent plastics material capable of resisting to a temperature of at least 115°C, are partially filled with the compost 1 prepared as specified above or having any other suitable composition. The dimensions of the bags may be 54 x 40 cm, and the bags may be provided, if desired, with a lateral bellows. The bag 102, designed to be closed sealingly, as described hereinafter, is also provided with filter means permitting a slow exchange of air and gas between the interior of the bag and the outside ambient. This filter means for the air exchange is located at the upper empty portion of the bag 102, that is above the level of the compost 1, and may be formed, for example, by at least one opening 3 in the wall of the bag 102, and closed by at least one disc 4 of air-permeable filter material, such as felt, placed over said opening on the outer side of the bag 102, as shown in Fig. 3. The disc 4 of filter material is kept in place by a member 5 of plastics material welded or glued to the wall of the bag 102 all around the disc 4 and also with at least one opening 6.

The moistened compost withdrawn from the storage silo may be introduced into the bags 2 or 102 either manually or mechanically, for example by means of bag-filling machines with volumetric meters. Each bag 2, 102 with the respective batch of compost 1 can weigh, for example, 3 to 4 Kg. The bags 2, 102 are then closed, and the closure may be also effected either manually or mechanically. The bags 102 provided with filter means for air exchange with the outer ambient, may be sealingly closed, for example, by a welded or glued line 7, as shown in Fig. 2. The bags 2 which, however, are not provided with suitable means of this kind, will be closed so as to permit a filtered exchange of air and gas between the interior of the bag 2 and the outer ambient. For this purpose, by way of example, the flaps of the mouth of the bag 2 may be gathered and tied sealingly, for example by means of a string 9, around a plug 8 of air-permeable filter material, sich as felt, as shown in Fig. 1.

The bags 2 or 102, closed and containing the compost 1, are subjected to heat treatment for a number of hours at a temperature of about 100°C, so as to obtain the sterilization of the compost. For this purpose, the bags 2 or 102 constituting the compost packages prepared and coming from the bag-filling and packaging machine, may be fed to an apparatus provided with a high-frequency generator where they undergo a rapid pre-heating to raise the temperature of the compost to about 90-95°C. This treatment permits to reduce the heating time because the compost 1 in the bags, being of highly insulating nature, would require 8 to 10 hours to reach the sterilization temperature. Immediately after this rapid pre-heating, the compost packages are transferred into a hot-air furnace where their temperature is raised to 98°C and is maintained 5 hours at this value. At the end of this period of time, the compost will be sterile and must be cooled. The cooling may be effected in a tunnel apparatus and cannot be abrupt, so as by means of strongly refrigerated air, because it would cause abrupt variations of the volume of air within the bags and would permit possible contamination through the air-exchange means between the interior of a package and the outer
ambient. In fact, a too quick and abrupt cooling would
cause a big suction of air from the ambient into a bag 2
or 102 through the filters 4 or 8, with the risk of
entraining contaminating agents with the air into the bag.
Cooling, therefore, must be gradual, for example in the
course of one night, so that the day after the compost
will have a temperature of about 25°C, that is the optimum
for sowing.

Upon completion of the cooling process, the bags 2 or
102 with the compost are ready to be inseminated. The
temperature of the compost upon the insemination must be
about 25°C, and this temperature must be maintained
constantly, preventing any possibility of thermal increase.
An increase of temperature indicates either an improper
sterilization or a cooling effect only on the outer layer
of the compost while the central portion is still at a
higher temperature. Such an increase of temperature would
cause the death of mycelium and, therefore, a considerable
loss of inseminated compost packages due to lack of
mushroom development, which can be ascertained only at the
end of the incubation period.

The insemination with mycelium of the compost 1 in
the bags 2 or 102 is a particularly delicate operation and
must be so carried out as to ensure, in the compost 1, the
presence and development of only the edible mushroom to
be cultivated. An inaccurate or improper insemination
would cause a contamination of the compost with any banal

- 10 -          0085928

mould which, due to its quicker development and its action on the composition and pH of the substratum, would prevent the development of the inseminated mycelium.

The insemination of the compost 1 with mycelium is effected by suitable containers 10 comprising a pointed conical body 110 having an enlarged head 210 at the end thereof opposite to the pointed end, as shown in fig. 4. The conical body 110 of the container 10 is provided with side openings 11 in any number and of any shape. The mouth of the container 10 is located at the enlarged head 210 thereof and may be sealingly closed, for example, by means of a little lid or plug 12 that can be snapped into the enlarged head 210. The solid mycelium to be inseminated is developped on seeds 13, and the latter are then poured and enclosed into the previously sterilized conical containers 10. The size of the seeds 13 and side openings 11 in the body 110 are selected so that the seeds 13 cannot pass through the openings 11. The preparation of the pointed conical containers 10, namely their sterilization and filling with mycelium developped on seeds 13, may be effected either manually in appropriately protected conditions or mechanically by means of a sterilizing and/or packing machine.

To effect the insemination of the compost 1 in the bags 2 or 102, at least one pointed container 10 is driven in each bag 2 or 102 so that the side openings 11 thereof will be all located completely within the bag 2, 102 and at least a portion of the side openings will be located within the compost 1 in the bag 2, 102. The enlarged head 210 of the container 10 driven in the bag 2, 102 will be located outside the bag 2, 102 and will prevent the conical container 10 from penetrating into the bag completely. The container 10 remains in this driven-in position on the respective bag over the whole period of incubation and storage of the inseminated compost, until the latter is used for the cultivation of mushrooms. In this driven-in position, the container 10 closes the penetration hole pierced by said container through the wall of the bag 2, 102. In order to ensure a more reliable closure of this hole, a restriction 310 merging with a rounded outline to the conical body 110 is formed between said conical body 110 and the enlarged head 210 of the container 10. By virtue of the resiliency of the plastics material constituting the bags 2 or 102, the edge of the hole pierced by the container 10 through the wall of the bag engages around the restriction 310 and sealingly grips the container 10, and also opposes sufficiently to any accidental extraction thereof.

By driving two or more pointed containers 10, filled with mycelium developped on seeds 13, into each bag 2, 102, the time required for the successive incubation can be reduced.

After the insemination step, the bags 2, 102 are kept in a suitable ambient condition during a given period of incubation. During this period, the mycelium enclosed in a driven-in container 10 passes through the side openings 11

of the container 10 and encroaches on the compost 1 and begins the development therethrough which appears, after a few days from insemination, like a white and fluffy halo growing gradually until it encroaches on the entire compost. At the end of the incubation period, the compost 1 in the bags 2, 102 is ready for the cultivation of mushrooms. Specifically, after the insemination, the bags 2, 102 are grouped on suitable pallets and are carried into incubation chambers by means of fork lifts. These chambers must be maintained at a temperature of 25° to 28°C and in darkness, and the ambient air must be slowly changed periodically to remove the excess of carbon dioxide that gradually develops due to the breathing activity of the growing mycelium.

Incubation will last about 3 months. At the end of this period, the compost-containing bags may be either transferred to agricultural areas to be used for mushrooms cultivation, or stored in preservation chambers. These chambers are similar to refrigerating chambers used for preservation of fruit and vegetables and must be maintained at a temperature of +2 to 0°C. The bags 2, 102 containing the inseminated and incubated compost will be stored in these chambers until they will be used on the field. The refrigerated compost should be kept preferably in darkness, but no air exchange is required.

The packages of compost inseminated with mycelium according to the method of the invention are characterized by having driven therein a partly protruding container 10 containing the mycelium.

- 13 -  0085928

The method of the invention achieves the object to simplify the insemination of sterile packages with mycelium, to operate in normal ambient conditions, to use any type of mycelium (even the commercially-available mycelium), which is important to avoid the necessity of creating (at individual compost-production units) complicated and expensive mycelium-production laboratories. The method of the invention, particularly, permits the insemination of mycelium in a packaged compost, either in a sterile or non-sterile environment, thus permitting its application and, therefore, the cultivation of mushrooms in various agricultural conditions.

Many changes and modifications may be made to the invention described above, all within the scope of the inventive principle. Moreover, the details may be changed with any technical equivalent. Practically, any suitable material may be used, and any shape and size may be selected for the container of mycelium, in accordance with the requirements.

## CLAIMS

1. A method for the insemination with mycelium of compost packages for the cultivation of mushrooms, characterized by the fact that the compost (1) is enclosed within packages (2, 102) of thermoresistant plastics material, said packages (2, 102) are submitted to heat treatment to sterilize the compost (1), pointed containers (10) with a side wall provided with openings (11) are sterilized, said containers are filled with mycelium, are closed and are driven either manually or mechanically at least one into each package (2, 102) by piercing the wall of the latter and by inserting at least a part of the body (110) of the container (10) provided with said openings (11) into the compost (1).

2. A method according to claim 1, characterized by the fact that the pointed container (10) is driven into the compost package (2, 102) so as to protrude partially outwards from the package (2, 102), while the side openings (11) of the container (10) are all located within the package (2, 102), and the container (10) is left in this driven-in position wherein it plugs the hole pierced by the said container (10) through the wall of the package (2, 102).

3. A method according to claims 1 and 2, characterized by the fact that the pointed containers are filled with mycelium developped on seeds.

4. A device for carrying out the method according to any one of claims 1 to 3, characterized by the fact that it comprises a package (2, 102) of plastics material that is preferably transparent and capable of resisting to sterilization temperatures, said package being designed to contain the compost (1) to be inseminated with mycelium and being designed to be closed, after the introduction of the compost, so as to permit a filtered exchange of air between the interior of the package and the outer ambient.

5. A device according to claim 4, characterized by the fact that the package (102) is closed sealingly after the introduction of the compost (1) , and is provided with means (3, 4, 5, 6) permitting the filtered exchange of air between the interior of the package (102) and the outer ambient.

6. A device according to claim 4, characterized by the fact that the mouth flaps of the package (2) are clamped and for example sealingly tied around a plug (8) of filtering and air-permeable material.

7. A device according to any one of claims 4 to 6, characterized by the fact that it comprises a pointed conical container (10) designed to contain the mycelium and provided with one or more openings (11) in its side wall while it presents, at the end opposite the pointed and, an enlarged head (210) having a mouth that can be sealingly closed.

8. A device according to claim 7, characterized by the fact that the pointed container (10) comprises a restriction (310) located between the conical body (110) and the enlarged head (210) and merging by means of a rounded profile with the conical body (110).

9. A compost inseminated with mycelium in accordance with the method and by means of the device of the preceding claims, characterized by the fact that it is enclosed within a package (2, 102) of plastics material, which is preferably transparent and in the form of a bag, provided with filter means (8; 3, 4, 5, 6) for air exchange between the interior of the bag (2, 102) and the outer ambient and having driven therein a pointed container (10), preferably of conical shape, containing the mycelium developped on seeds (13) and comprising side openings (11) which are all located entirely within the package and penetrate at least partly in the compost (1), which container (10) protrudes outwards from the package (2, 102), preferably with an enlarged head (210), and is left in its driven-in position to close the penetration hole through the wall of the package (2, 102).

Fig.1

Fig.2

0085928

Fig.4

Fig.3

European Patent Office

**EUROPEAN SEARCH REPORT**

**0085928**
Application number

EP 83 10 0906

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-2 851 821 (GULOCHON) *Column 1, lines 38-72 - column 3, line 55 to column 4, line 8; figure 1* | 1 | A 01 G 1/04 |
| | --- | | |
| A | FR-A-1 327 785 (CHAPUIS) *The whole document* | 1 | |
| | ----- | | |

TECHNICAL FIELDS SEARCHED (Int. Cl. ³)

A 01 G

The present search report has been drawn up for all claims

| Place of search | Date of completion of the search | Examiner |
|---|---|---|
| THE HAGUE | 10-05-1983 | HERYGERS J.J. |